Europäisches Patentamt

European Patent Office

Office européen des brevets

Veröffentlichungsnummer: **0 290 955**

**A2**

# EUROPÄISCHE PATENTANMELDUNG

Anmeldenummer: 88107210.2

Int. Cl.⁴ **H02G 15/013**

Anmeldetag: 05.05.88

Priorität: 15.05.87 DE 3716252

Veröffentlichungstag der Anmeldung:
**17.11.88 Patentblatt 88/46**

Benannte Vertragsstaaten:
**AT BE CH DE ES FR GB GR IT LI LU NL SE**

Anmelder: **KSA Dichtsysteme GmbH & Co. KG**
**Steinbeisstrasse 46**
**D-7143 Vaihingen an der Enz(DE)**

Erfinder: **Abele, Berthold Wilhelm**
**Am Schalkstein 21**
**D-7121 Walheim/Neckar(DE)**

Vertreter: **Kohl, Karl-Heinz et al**
**Patentanwälte Dipl.-Ing. A.K. Jackisch-Kohl**
**Dipl.-Ing. K.H. Kohl Stuttgarter Strasse 115**
**D-7000 Stuttgart 30(DE)**

Einrichtung zum Abdichten von miteinander verbundenen Leitern von Kabeln.

Die Einrichtung dient zum Abdichten von miteinander verbundenen Leitern von Kabeln und hat Dichtteile (12, 14), die am Kabel dichtend anliegen und in einem Dichtungsgehäuse (6) untergebracht sind. Es besteht aus lösbar miteinander verbundenen Gehäuseteilen (6a, 6b), in denen jeweils ein das Dichtteil (12, 14) bildenden Dichtteilabschnitt (12a, 12b) untergebracht ist. Das Dichtteil (12, 14) dichtet nach dem Zusammenfügen der Gehäuseteile (6a, 6b) das Kabel und das Dichtungsgehäuse (6) einwandfrei ab.

FIG. 2

EP 0 290 955 A2

## Einrichtung zum Abdichten von miteinander verbundenen Leitern von Kabeln

Die Erfindung betrifft eine Einrichtung zum Abdichten von miteinander verbundenen Leitern von Kabeln nach dem Oberbegriff des Anspruches 1.

Es ist bekannt, zum Abdichten die miteinander verdrahteten Kabelleiter mit einer Folie zu umwickeln, aud die noch ein Bitumenauftrag aufgebracht wird. Zusätzlich werden meist noch andere Dicht- und Kunststoffe zur Abdichtung beigegeben. Diese umständliche und schwierige Verbindung und Abdichtung der Kabelleiter ist vor allem sehr unangenehm, wenn sie in Schächten durchgeführt werden muß, wo es dunkel und die Sauerstoffzufuhr beeinträchtigt ist. Beim Erwärmen des Bitumens treten unangenehme Dämpfe und Gerüche auf, die zu einer Gesundheitsgefährdung führen können. Es kann unter diesen Umständen vorkommen, daß die Verbindung und Abdichtung des verdrahteten Kabelbereichs unzureichend und keine einwandfreie Dichtheit gewährleistet ist.

Bei der gattungsgemäßen Einrichtung (DE-GM 74 25 615) liegen die miteinander verdrahteten Kabelleiter in einem Gehäuse, das einen längsgeteilten Kabeleinführungsstutzen als Dichtungsgehäuse aufweist. Auf das Kabel werden zur Abdichtung als Dichtteile elastische Dichtungswickel aufgebracht, die beim Zusammenfügen der Gehäuseteile in eine solche Form gebracht werden sollen, daß sie den freien Querschnitt des Dichtungsgehäuses verschließen. Hierbei ist aber keine Gewähr dafür gegeben, daß die Dichtungsmassen sowohl dichtend am Kabel als auch dichtend an der Innenwandung des Dichtungsgehäuses anliegen. Eine einwandfreie Abdichtung ist somit nicht gewährleistet.

Der Erfindung liegt die Aufgabe zugrunde, die gattungsgemäße Einrichtung so auszubilden, daß beim Zusammenfügen der Gehäuseteile des Dichtungsgehäuses eine zuverlässige Abdichtung erreicht wird.

Diese Aufgabe wird bei der gattungsgemäßen Einrichtung erfindungsgemäß mit den kennzeichnenden Merkmalen des Anspruches 1 gelöst.

Bei der erfindungsgemäßen Einrichtung werden zur Abdichtung der durch das Dichtungsgehäuse geführten Kabel vorgefertigte, aus den beiden Dichtteilabschnitten gebildete Dichtteile verwendet, die in den Gehäuseteilen vor dem Zusammenfügen eingesetzt werden können. Die Dichtteilabschnitte bilden dann beim Zusammenfügen der Gehäuseteile das Dichtteil. Da die Dichtteilabschnitte eine vorgegebene Form haben, ist sichergestellt, daß das Dichtteil nach dem Zusammenfügen der Gehäuseteile einwandfrei gegen das Kabel und das Dichtungsgehäuse abdichtet. Es besteht darum nicht die Gefahr, daß infolge einer ungenügenden Abdichtung beispielsweise Feuchtigkeit in die erfindungsgemäße Einrichtung eindringt. Die miteinander verbundenen Kabelleiter innerhalb der erfindungsgemäßen Einrichtung müssen somit nicht mehr gesondert isoliert und abgedichtet werden, weil die eigentliche Isolierung und Abdichtung von dem im Dichtungsgehäuse untergebrachten Dichtteil übernommen wird. Die Gefahr von undichten Stellen und das umständliche Verbinden durch Umwickeln mit Folien und anschließendes Auftragen von Dichtmaterial entfällt. Das Dichtungsgehäuse läßt sich schon vor seinem Einsatz auf die erforderliche Dichtheit überprüfen, so daß ein unnötiger Transport an den betreffenden Einsatzort entfällt.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispiels näher beschrieben. Es zeigt

Fig. 1 eine erfindungsgemäße Einrichtung in Ansicht,

Fig. 2 ein Dichtungsgehäuse der erfindungsgemäßen Einrichtung im Axialschnitt,

Fig. 3 eine Hälfte des Dichtungsgehäuses nach Fig. 2 in Draufsicht auf seine Innenseite,

Fig. 4 eine Dichtung der erfindungsgemäßen Einrichtung nach Fig. 1 in Richtung der Dichtungsachse gesehen,

Fig. 5 die Dichtung nach Fig. 4 in Seitenansicht,

Fig. 6 einen Schnitt längs der Linie VI-VI in Fig. 5,

Fig. 7 eine Hälfte einer Dichtung gemäß Fig. 4 bis 6 in Einbaulage,

Fig. 8 die Dichtung nach Fig. 7 in einer ersten Dichtstellung,

Fig. 9 die Dichtung nach Fig. 8 in einer zweiten Dichtstellung, in der ein Kabel mit größerem Durchmesser als in Fig. 8 abgedichtet wird.

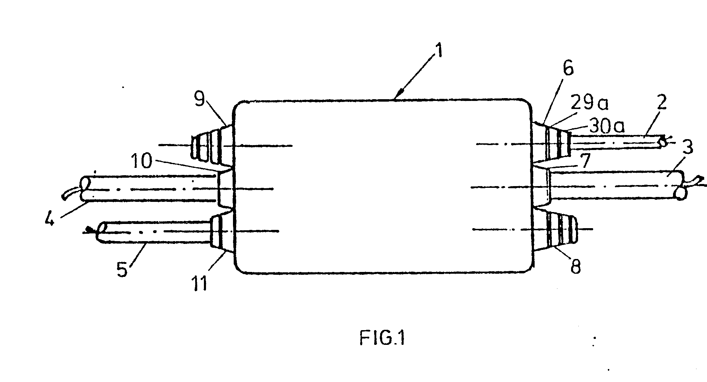

Fig. 1 zeigt eine Einrichtung zum Abdichten und Verbinden bzw. Verdrahten von Kabeln und Kabelsträngen, wie Telefonpostkabel, in einem Abzweigbereich, wobei die Kabel unter-oder überirdisch verlegt werden können. Abstelle von Kabeln können aber auch Schläuche, Rohre oder Kanäle mit der Einrichtung abgedichtet werden.

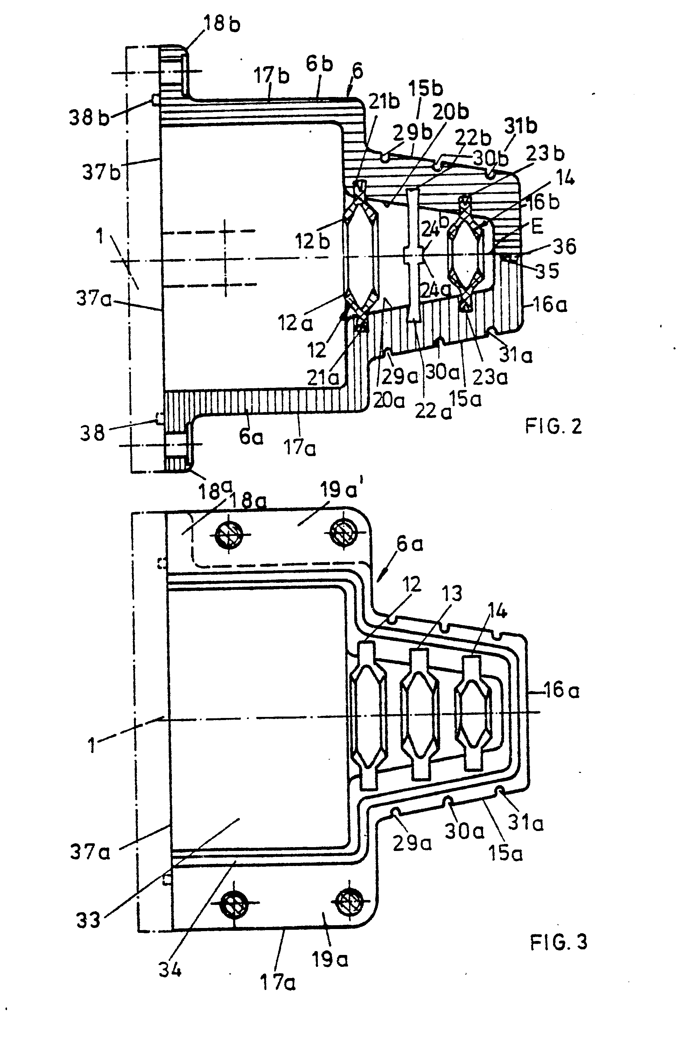

Die Einrichtung besteht im wesentlichen aus einem Kabelverteilergehäuse 1 mit Eintrittsöffnungen für die miteinander zu verdrahtenden Kabel 2 bis 5, wobei die Eintrittsöffnung durch Dichtungsgehäuse 6 bis 11 mit darin angeordneten Dichtteilen 12 bis 14 (Fig. 2) gebildet sind.

Wie Fig. 2 anhand des Dichtungsgehäuses 6 zeigt, besteht das Dichtungsgehäuse aus zwei vorzugsweise gleichen Gehäusehälften 6a und 6b, die als Halbschalen ausgebildet sind. Sie weisen jeweils einen kegelstumpfförmig verjüngten Endabschnitt 15a und 15b auf, der schulterförmig abgesetzt in einem zylindrischen Übergangsabschnitt 17a und 17b zum Anschließen an das Kabelverteilergehäuse 1 übergeht. Die Übergangsabschnitte 17a, 17b weisen einen radial verlaufenden Halteflansch 18a, 18b auf. Sie erstrecken sich im wesentlichen über den gesamten Umfang der Hälften 6a, 6b. Die Halteflansche 18a, 18b verlaufen jeweils zwischen zwei axial über die ganze Höhe der Übergangsabschnitte 17a, 17b verlaufende Ränder 19a, 19a' (Fig. 3) der Hälften 6a, 6b, mit denen diese bei montiertem Dichtungsgehäuse 6 flächig und dichtend aneinanderliegen.

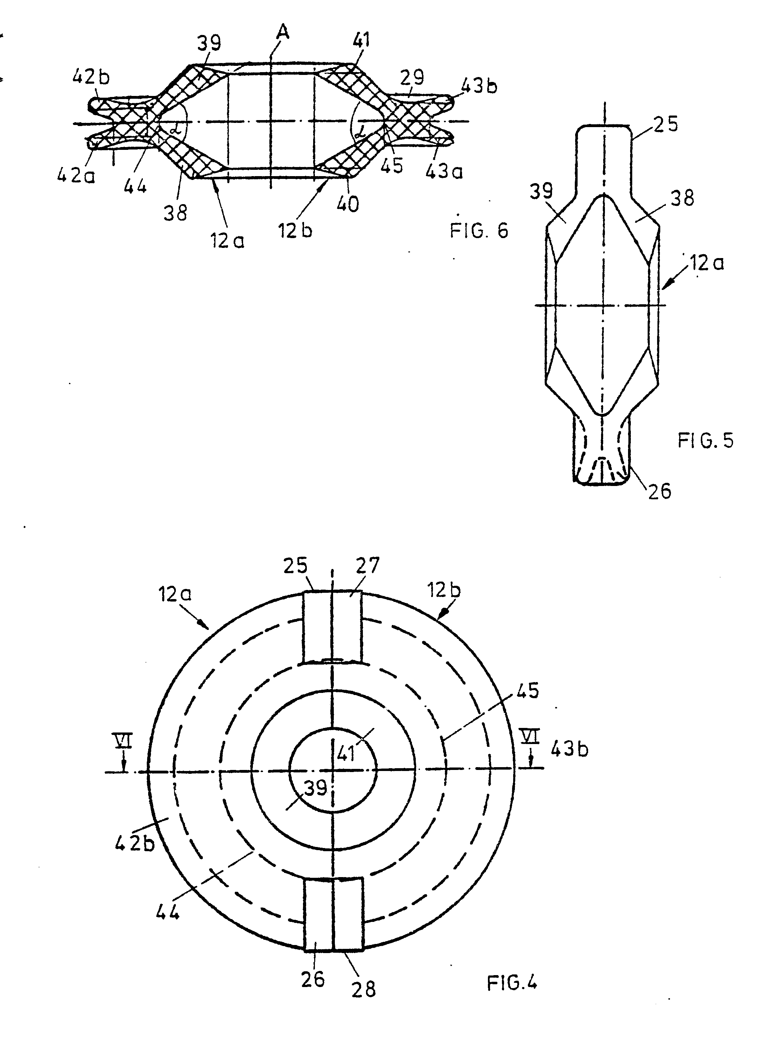

Wie die Fig. 2 und 3 weiter zeigen, weisen die Hälften 6a, 6b an den Innenseiten 20a, 20b ihrer verjüngten Endabschnitte 15a, 15b umlaufende nutartige Aufnahmen 21a bis 23a und 21b bis 23b auf, in denen jeweils eines der Dichtteile 12 bis 14 gehalten werden. Wie anhand der Aufnahmen 22a, 22b, in der zur besseren Darstellung der Ausbildung der Aufnahmen kein Dichtteil angeordnet ist, deutlich erkennbar ist, verjüngen sich die Aufnahmen 21a bis 23a und 21b bis 23b in Richtung auf die Trennebene E des Dichtungsgehäuses, so daß ein sicherer Halt der Dichtteile 12 bis 14 in den Aufnahmen gewährleistet ist. Wie anhand der Aufnahmen 22a, 22b weiter erkennbar ist, haben die Aufnahmen im Bereich ihrer Enden 24a, 24b über ihre ganze Tiefe etwa gleiche Weite, so daß dort die Dichtteile 12 bis 14 mit verdickten Enden 25 bis 28 (Fig. 4, 5) von Dichtungsabschnitten 29 (Fig. 6) eingreifen können. Die Aufnahmen 21a bis 23a und 21b bis 23b sind mit axialem Abstand hintereinander angeordnet. Ihre lichte Weite nimmt von den Übergangsabschnitten 17a, 17b aus axial nach außen vorzugsweise in gleichem Maße ab, wie sich die Endabschnitte 15a, 15b nach außen verjüngen. Die erste Aufnahme 21a, 21b mit der größten lichten Weite dient zur Aufnahme des Dichtteiles 12, das Kabel mit größerem Durchmesser, beispielsweise von 16 bis 20cm abdichtet, als die Dichtteile 13 und 14. Das Dichtteil 12 liegt in Höhe des Überganges von den Endabschnitten 15a, 15b zu den Übergangsabschnitten 17a, 17b, während das Dichtteil 13 etwa in halber Länge des Endabschnittes 15a, 15b liegt.

Das Dichtteil 13 dient beispielsweise zur Abdichtung von Kabeln mit einem Durchmesser von 12 bis 16 cm, während das kleinste Dichtteil 14 zur Abdichtung von Kabeln mit Durchmessern von etwa 8 bis 12 cm vorgesehen ist. Es liegt mit Abstand neben einem als Verschlußplatte ausgebildeten Boden 16a, 16b der Endabschnitte 15a, 15b.

Die Endabschnitte 15a, 15b weisen vorzugsweise drei Umfangsnuten 29a bis 31a und 29b bis 31b auf, die in Radialebenen liegen, die zwischen den Aufnahmen 21a bis 23a, 21b bis 23b und dem Boden 16a, 16b angeordnet sind. Die Umfangsnuten bilden Sollbruchstellen, an denen ein Teil der Endabschnitte 15a, 15b bzw. das Dichtungsgehäuse 6 abgetrennt werden kann. So wird z.B. beim Einsatz der Einrichtung, wenn das Dichtungsgehäuse 6 und im Dichtteil 14 das Kabel 2 (Fig.1) eingesetzt bzw. abgedichtet werden soll, nur der Boden 16a 16b abgetrennt, in dem der Endabschnitt 15a, 15b an der Sollbruchstelle 23a, 23b durchgetrennt wird. Wenn jedoch in das Dichtungsgehäuse 6 ein dickeres Kabel eingesetzt werden soll, dann wird der Endabschnitt 15a, 15b an der Umfangsnut 33a, 33b bzw. 29a, 29b abgetrennt, je nach der Dicke des abzudichtenden Kabels.

Wie Fig. 3 zeigt, weist die Gehäusehälfte 6a in ihrem die Schalenöffnung 33 begrenzenden inneren Randbereich eine als Nut 34 ausgebildete Trennfuge auf, in die eine Dichtung 35 (Fig. 2), wie beispielsweise eine Dichtungsschnur, eingesetzt wird. Sie kann in die Nut 34 eingelegt, eingeknüpft, eingeklebt oder einvulkanisiert sein. Die Dichtung 35 ist so dick, daß sie über die Nut 34 bzw. die Trennebene E des Dichtungsgehäuses 6 ragt. Beim Zusammenschrauben der Gehäusehälften 6a und 6b wird die Dichtung 35 elastisch zusammengedrückt, so daß der Trennbereich zwischen den Gehäusehälften einwandfrei abgedichtet ist. Vorzugsweise verjüngt sich die Nut 34 in Richtung auf die Trennebene E entsprechend wie die Aufnahmen 21a bis 23a und 21b bis 23b der Dichtteile 12 bis 14, so daß die Dichtung 35 nicht unbeabsichtigt aus der Nut 34 herausfallen kann.

Die Dichtungsgehäuse 6 bis 11 bestehen vorzugsweise aus einem Material, das feuchtigkeitsundurchlässig ist und vorzugsweise auch wärme-und hitzebeständig sowie gasdiffusionsbeständig ist. Das Material kann ferner auch elektrische Sicherheitsvorschriften erfüllen und eine gewisse Elastizität aufweisen. Vorzugsweise eignen sich hierfür entsprechende Kunststoffe und auch Aluminium. Das Kabelverteilergehäuse 1 besteht vorzugsweise aus demselben Werkstoff, wie die Dichtungsgehäuse 6 bis 11, die am Gehäuse 1 verschraubt sind. Über die Stirnseite 37a, 37b der Gehäusehälften 6a, 6b ragt eine über den Umfang verlaufende Dichtung 38, 38b (Fig. 2), mit der das Dichtungsgehäuse 6 dichtend am Kabelverteilergehäuse 1 anliegt. Das Kabelverteilergehäuse 1 besteht, wie die Gehäuse 6 bis 11, aus zwei (nicht im einzelnen dargestellten) Hälften, deren Teilungsebenen mit der Teilungsebene E des Dichtungsgehäuses 6 zusammenfällt. Vorzugsweise liegt die Trennebene in der Längsmittelebene des Gehäuses 1, so daß die Gehäusehälften einfach auf die zu verbindenden Kabel 2 bis 5 aufgesetzt werden können.

Besonders vorteilhaft ist es, wenn die Dichtungsgehäuse 6 bis 11 einteilig mit dem Kabelverteilergehäuse 1 ausgebildet sind, da dann in dem Übergangsbereich zwischen dem Gehäuse 1 und den Gehäusen 6 bis 11 keine Dichtungsprobleme auftreten.

Die Dichtteile 12 bis 14 sind bis auf ihre unterschiedlichen Abmessungen gleich ausgebildet. Sie bestehen vorzugsweise aus elastomerem Werkstoff und haben Dichtlippen 38 bis 41 (Fig. 6), mit einer speziellen Lippengeometrie, die gewährleistet, daß die Dichtteile 12 bis 14 auch Kabel mit unrundem Querschnitt einwandfrei abdichten.

Jedes Dichtteil 12 bis 14, von denen in den Fig. 4 bis 9 nur das eine Dichtteil 12 dargestellt ist, besteht aus zwei gleichen Hälften 12a, 12b, von denen jeweils die eine in der einen Gehäusehälfte 6a und die andere in der anderen Gehäusehälfte 6b in den entsprechenden Aufnahmen 21a bis 23a und 21b bis 23b gesichert ist.

Wie oben beschrieben, sind die Dichtteile 12 bis 14 mit einem Befestigungsteil 29 in den Aufnahmen unter Vorspannung gehalten. Hierzu weist das Befestigungsteil 29 zwei V-förmig radial nach außen über die Radialmittelebene des Dichtteiles ragende Schenkel 42a, 42b und 43a, 43b auf, die in der Aufnahme elastisch zusammengedrückt sind und so in Verbindung mit den nach außen verjüngt ausgebildeten Aufnahmen für einen sicheren Sitz der Dichtteile in den Aufnahmen sorgen.

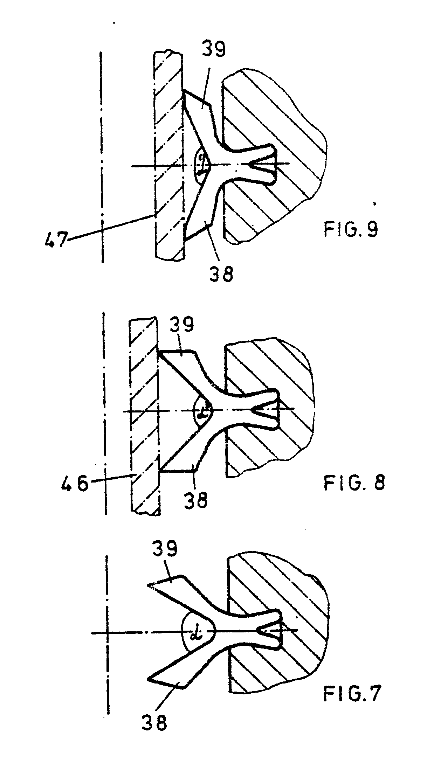

Die Dichtlippen 39 bis 41 ragen in entgegengesetzte Richtung wie die Schenkel 42a, 42b und 43a, 43b radial nach innen und verlaufen ebenfalls V-förmig von einem Wurzelbereich 44, 45 aus. Von hier aus verbreitern bzw. verdicken sich die Dichtlippen 39 bis 41 nach innen in Richtung auf die dichtteilachse A derart, daß die Dichtlippen im Schnitt etwa Dreieckform aufweisen. Die Dichtlippen haben folglich im Wurzelbereich 44, 45 ihre kleinste Dicke, so daß die Dichtlippen leicht und ohne hohen Kraftaufwand auseinandergespreizt werden können, um einwandfrei an dem abzudichtenden Kabel anzuliegen. Die radiale Anpreßkraft der Dichtlippen ist um so größer, je kleiner der Winkel α zwischen den axial benachbarten Dichtlippen 38, 39 bzw. 40, 41 und je dicker die Dichtlippen sind. Wie die Fig. 7 bis 9 zeigen, werden die Dichtlippen 38 bis 39 um so weiter auseinandergespreizt, je größer der Durchmesser des abzudichtenden Kabels 46 bzw. 47 (Fig. 8, 9) ist. Bei Abdichtung eines Kabels 46 mit einem Durchmesser von beispielsweise etwa 8 cm werden die Dichtlippen 38, 39 aus ihrer Ausgangslage (Fig. 7) radial nach außen gebogen (Fig. 8), so daß der Winkel α' gegenüber dem Winkel α der unverformten Dichtung größer wird. Bei Abdichtung eines Kabels 47 mit einem Durchmesser von beispielsweise 12 cm (Fig. 9), werden die Dichtlippen 38, 39 noch weiter aufgespreizt, so daß der Winkel α" zwischen den Dichtlippen noch größer, im Ausführungsbeispiel größer als 90° wird.

Durch die getrennten Dichtlippen 38 bis 41 ist gewährleistet, daß die Kabel auch dann, wenn sie beispielsweise im Bereich der Dichtteile gekrümmt verlaufen, einwandfrei abgedichtet werden. Je nach Krümmungsrichtung liegen immer die schräg einander gegenüberliegenden Dichtlippen 39 und 40 oder 38 und 41 am abzudichtenden Kabel an. Dadurch ist in jedem Fall eine einwandfreie Abdichtung gewährleistet.

Die Enden 25 bis 28 der Dichtteile 12a, 12b sind massiv ausgebildet und haben etwa rechteckförmigen Querschnitt (Fig. 4 bis 6). Die radial nach außen sich erstreckenden Schenkel 42a, 42b; 43a, 43b schließen an die verdickten Enden 25 bis 28 an. Die Dichtteile 12a, 12b ragen mit diesen verdickten Enden geringfügig über die einander zugewandten Stirnseiten der Gehäusehälften 6a, 6b vor. Beim Zusammenschrauben der Gehäusehälften liegen die verdickten Enden 25 bis 28 der Dichtteile 12a, 12b mit ihren Stirnseite aneinander und werden infolge ihres Überstandes elastisch zusammengedrückt. Dadurch wird im Bereich der Trennebene E eine hohe Dichtheit gewährleistet. Die massiv ausgebildeten Enden 25 bis 28 können die hierbei auftretenden Kräfte sicher aufnehmen. Die Dichtlippen 38 bis 41 sind auch im Bereich der verdickten Enden 25 bis 28 vorgesehen, so daß sie über den gesamten Umfang der aus den beiden Dichtteilen 12a, 12b gebildeten Dichtung verlaufen.

Zum Verbinden und Abdichten der Kabel 2 bis 5 werden die vorgefertigten und mit den Dichtteilen vormontierten Hälften des Kabelverteilergehäuses 1 und des Dichtungsgehäuses 6 über die verdrahteten Kabel 2 bis 5 gesetzt und die Gehäusehälften durch Verschrauben wieder fest zu einer vorgefertigten Baueinheit miteinander verbunden.

Je nach dem Durchmesser des abzudichtenden Kabels werden die Endabschnitte 15a bis 15b des Dichtungsgehäuses 6 an den entsprechenden Sollbruchstellen 29a bis 31a, 29b bis 31b abgetrennt. Das Dichtungsgehäuse 6 kann an Ort und Stelle an das abzudichtende Kabel angepaßt werden. Zunächst ist das Dichtungsgehäuse durch den Gehäuseboden 16a, 16b geschlossen, so daß während der Lagerung kein Schmutz eindringen kann. Im Gehäuseboden 16a, 16b muß auf jeden Fall an der Sollbruchstelle 31a, 31b abgetrennt werden. Falls für das abzudichtende Kabel die kleinste Dichtung 14 ausreicht, muß kein weiterer Teil des Dichtungsgehäuses 6 mehr abgetrennt werden. Bei größeren Kabeldurchmessern muß das Dichtungsgehäuse 6 an den Sollbruchstellen 30a, 30b oder 29a, 29b abgetrennt werden. Die Dichtungen 12 bis 14 überdecken jeweils einen entsprechenden Durchmesserbereich der abzudichtenden Kabel, so daß schon mit den drei Dichtungen ein sehr großer Durchmesserbereich abgedeckt werden kann.

Aufgrund der beschriebenen Ausbildung des Dichtungsgehäuses 6 muß vor der Abdichtung noch nicht bekannt sein, welchen Durchmesser die zu verbindenden Kabel haben. Vielmehr ist eine Anpassung an verschiedene Kabel mit unterschiedlichem Durchmesser jederzeit vorort auf einfache Weise möglich, da je nach Bedarf das entsprechende Dichtteil 12, 13, 14 benutzt werden kann.

Es ist auch ohne weiteres, bei entsprechender Länge des Dichtungsgehäuses, möglich, in ihm weitere Dichtteile mit größerem oder kleinerem Durchmesser anzuordnen, so daß ein noch größerer Kabeldurchmesserbereich abgedeckt werden kann. Die Kabel sind jeweils im Einführbereich in das Kabelverteilergehäuse 1 oder in andere ähnliche Gehäuse durch Dichtteile sicher abgedichtet, so daß der verdrahtete Bereich innerhalb des Kabelverteilergehäuses 1 selbst nicht abgedichtet werden muß.

Die beschriebene Einrichtung eignet sich auch zur Abdichtung von Stellen, an denen die Kabel beschädigt sind, um diese Stellen vorläufig abzudichten.

**Ansprüche**

1. Einrichtung zum Abdichten von miteinander verbundenen Leitern von Kabeln, mit mindestens einem Dichtteil, das im Bereich außerhalb der miteinander verbundenen Leiter am Kabel dichtend anliegt und in einem Dichtungsgehäuse untergebracht ist, durch welches das abzudichtende Kabel verläuft und das aus lösbar miteinander verbundenen Gehäuseteilen besteht, dadurch gekennzeichnet, daß das Dichtteil (12 bis 14) zweiteilig ausgebildet ist und daß jeweils ein Dichtteilabschnit (12a, 12b) einem Gehäuseteil (6a, 6b) zugeordnet ist.

2. Einrichtung nach Anspruch 1, die mehrere, mit Abstand hintereinander angeordnete Dichtteile aufweist, die unterschiedliche Innendurchmesser für verschieden große Kabeldurchmesser aufweisen, dadurch gekennzeichnet, daß das Dichtungsgehäuse (6) mindestens ein, vorzugsweise mehrere jeweils einem Dichtteil (12 bis 14) zugeordnete Sollbruchstellen (29a bis 31a, 29b bis 31b) aufweist, die jeweils im Bereich zwischen den Dichtteilen (12 bis 14) vorgesehen sind.

3. Einrichtung nach Anspruch 2, dadurch gekennzeichnet, daß die Sollbruchstellen (29a bis 31a, 29b bis 31b) durch Vertiefungen in der Außenseite des Dichtungsgehäuses (6) gebildet sind.

4. Einrichtung nach einem der Ansprüche 1 bis 3, deren Dichtungsgehäuse sich nach außen verjüngt, dadurch gekennzeichnet, daß das verjüngte Ende (15a, 15b) des Dichtungsgehäuses (6) mit einer einteilig ausgebildeten Verschlußplatte (16a, 16b) verschlossen ist, vor der die vordere Sollbruchstelle (31a, 31b) liegt.

5. Einrichtung nach einem der Ansprüche 1 bis 5, die ein mit dem Dichtungsgehäuse verbundenes Kabelverteilergehäuse aufweist, dadurch gekennzeichnet, daß die Trennebene (E) des Dichtungsgehäuses (6) mit den Längsmittelebenen des Kabelverteiler-und Dichtungsgehäuses (1, 6) zusammenfällt.

6. Einrichtung nach einem der Ansprüche 1 bis 5, dadurch gekennzeichnet, daß die Gehäuseteile (6a, 6b) gegeneinander abgedichtet sind und daß vorzugsweise das eine Gehäuseteil (6a, 6b) eine in der Trennebene (E) verlaufende Nut (34) aufweist, in der eine Dichtung (35) angeordnet ist und die sich vorzugsweise in Richtung auf die Trennebene (E) des Dichtungsgehäuses (6) verjüngt.

7. Einrichtung nach einem der Ansprüche 1 bis 6, dadurch gekennzeichnet, daß das Dichtungs- und/oder Kabelverteilergehäuse (6, 1) aus einem feuchtigkeitsundurchlässigen Werkstoff, vorzugsweise Kunststoff oder Aluminium, besteht.

8. Einrichtung nach einem der Ansprüche 1 bis 7, dadurch gekennzeichnet, daß das Dichtteil (12 bis 14) als Lippendichtung ausgebildet ist.

9. Einrichtung nach einem der Ansprüche 1 bis 8, dadurch gekennzeichnet, daß das Dichtteil (12 bis 14) ein Befestigungsteil (29) aufweist, mit dem es in einer Aufnahme (21a bis 23a, 21b bis 23b) des Dichtungsgehäuses (6) befestigt, wie einvulkanisiert, verklebt, eingeklemmt, eingeknüpft od. dgl. ist und das vorzugsweise mindestens zwei etwa V-förmig zueinander und vertikal nach außen verlaufende Schenkel (42a, 42b; 32a, 43b) aufweist, mit denen es in der Aufnahme (21a bis 23a; 21b bis 23b) unter Vorspannung gehalten ist.

10. Einrichtung nach einem der Ansprüche 1 bis 9, dadurch gekennzeichnet, daß die Dichtteilabschnitte (12a, 12b) jeweils mindestens zwei axial benachbarte und radial nach innen ragende Dichtlippen (38 bis 41) aufweisen, die sich vorzugsweise radial nach innen in Richtung auf ihre Dichtlippenkanten verbreitern.

11. Einrichtung nach einem der Ansprüche 1 bis 10, dadurch gekennzeichnet, daß das freie Ende (25 bis 28) des Dichtteiles (12 bis 14) verdickt ausgebildet ist und vorzugsweise nach außen über die Trennebene (E) des Dichtungsgehäuses (6) ragt.

FIG.1

0 290 955

A 1-87 614
29.04.1988

0 290 955

FIG. 2

FIG. 3

FIG. 6

FIG. 5

FIG. 4

39

47

FIG. 9

38

39

46

FIG. 8

38

39

38

FIG.7